# EUROPÄISCHE PATENTANMELDUNG

(11) **EP 1 958 713 A1**
(43) Veröffentlichungstag der Anmeldung: **20.08.2008**
(21) Anmeldenummer: 08001398.0
(22) Anmeldetag: 25.01.2008
(51) Int. Cl.: B21D 19/00, B21D 53/88, F16F 1/32, F16D 13/58, C21D 7/02

(54) **Verfahren zur Herstellung einer Tellerfeder, Tellerfeder sowie Reibungskupplung mit einer solchen**

(30) Priorität: 15.02.2007 DE 102007007423
(71) Anmelder: LuK Lamellen und Kupplungsbau Beteiligungs KG, 77815 Bühl (DE)
(72) Erfinder: Schlechtriem, Stefan, 18046670 Sorocaba (BR)

(57) **Zusammenfassung**

Verfahren zur Herstellung einer Tellerfeder (8) mit einem ringförmigen Grundkörper (9), der zumindest einen umlaufenden Rand (16,116) aufweist, welcher zumindest eine durch Materialverdrängung gebildete Anformung (129) besitzt.

## Beschreibung

Die Erfindung betrifft ein Verfahren zur Herstellung einer Tellerfeder mit einem ringförmigen Grundkörper, der zumindest einen umlaufenden Rand aufweist, welcher wenigstens eine durch Materialverdrängung gebildete Anformung besitzt. Die Erfindung bezieht sich weiterhin auf eine entsprechend ausgebildete Tellerfeder sowie eine Reibungskupplung mit einer nach dem erfindungsgemäßen Verfahren hergestellten bzw. ausgebildeten Tellerfeder.

Tellerfedern bzw. Membranfedern, die durch Konizitätsveränderung zum Beispiel als Energiespeicher dienen können, sind allgemein bekannt. Solche Tellerfedern werden beispielsweise in Reibungskupplungen für Kraftfahrzeuge eingesetzt, wobei sie dann in den meisten Fällen die zur Drehmomentübertragung erforderliche Anpresskraft aufbringen. Es sind jedoch auch Anwendungsfälle bekannt, bei denen die Tellerfeder bzw. die Membranfeder als Hebelelement dient zur zumindest teilweisen Einleitung der zum Schließen der Reibungskupplung erforderlichen Anpresskraft. Bei solchen Reibungskupplungen wird also zumindest ein Teil der auf eine Anpressplatte einwirkenden Anpresskraft von außen in die Reibungskupplung eingeleitet, und zwar über ein tellerfederartig oder membranartig ausgebildetes Bauteil.

Zur Lebensdauererhöhung von Tellerfedern bzw. Membranfedern ist es auch bekannt, die an den Rändern vorhandenen Kanten abzurunden. Durch derartige Abrundungen können die möglicherweise im Bereich dieser Kanten auftretenden Spitzenspannungen reduziert werden. Diese Anformungen wurden bisher durch axiales Anprägen, insbesondere in einem Folgewerkzeug, hergestellt. Die so angeformten Abrundungen können jedoch nicht optimal ausgestaltet werden, da extrem hohe Kräfte notwendig sind, um die erforderliche Materialverformung herbeizuführen. Auch sind aufgrund der aufzuwendenden hohen Kräfte besonders große Pressen und auch sehr stabil ausgebildete Prägewerkzeuge erforderlich, wodurch wiederum hohe Kosten entstehen. Weiterhin ist für jede Tellerfedergröße ein besonderes Prägewerkzeug notwendig.

Der vorliegenden Erfindung lag die Aufgabe zugrunde, ein Verfahren zur Bildung der Anformungen an den Rändern von Tellerfedern bzw. Membranfedern zu entwickeln, welches eine bessere Ausgestaltung der Anformungen ermöglicht und somit auch eine Erhöhung der Lebensdauer der entsprechenden Bauteile gewährleistet. Weiterhin soll das erfindungsgemäße Verfahren unabhängig vom Tellerfederdurchmesser angewandt werden können bzw. das erfindungsgemäße Verfahren soll den Einsatz eines Werkzeuges ermöglichen, das unabhängig vom Tellerfeder-Außendurchmesser die notwendigen Anformungen erzeugen kann.

Die der Erfindung zugrunde liegenden Aufgaben werden bei einer Tellerfeder mit einem ringförmigen Grundkörper, der zumindest einen umlaufenden Rand aufweist, welcher wenigstens eine durch Materialverdrängung gebildete Anformung besitzt, unter anderem dadurch gelöst, dass die Materialverdrängung mittels eines Verfahrens erfolgt, das zumindest einen Rollprozess umfasst. Die wenigstens eine Anformung wird also dem zumindest einen Rand des ringförmigen Grundkörpers mittels wenigstens einer Rolle, welche die gewünschte Geometrie der Anformung aufweist, angeformt.

Üblicherweise werden Tellerfedern bzw. membranartige Bauteile aus Blech, das aus Stahl bzw. Federstahl besteht, herausgestanzt und somit zunächst eine Rohplatine erzeugt. Eine solche Platine hat zwei Seitenflächen und zumindest einen umlaufenden, vorzugsweise ringförmigen Rand, der im Wesentlichen axial zwischen den beiden Seitenflächen verläuft. Im Übergangsbereich zwischen dem Rand und den Seitenflächen sind die bereits erwähnten Kanten vorhanden, welche durch Materialverdrängung weggeformt werden.

Die zur Bildung der gewünschten Anformung an dem entsprechenden Rand bzw. der entsprechenden Kante erforderliche Materialverdrängung kann mittels wenigstens einer radial auf den ringförmigen Grundkörper einwirkenden, entlang des Umfanges bzw. der Kanten des Grundkörpers geführten Formrolle erzeugt werden.

Die nach dem erfindungsgemäßen Verfahren geformte Tellerfeder kann lediglich aus einem ringförmigen Grundkörper bestehen, der sowohl einen Außenrand als auch einen Innenrand aufweist, wobei zumindest einer dieser Ränder, vorzugsweise beide, eine durch einen Rollprozess erzeugte Anformung aufweisen. Es sind jedoch auch Tellerfedern bekannt, welche einen ringförmigen Grundkörper besitzen, der lediglich einen umlaufenden Rand aufweist, da von dem anderen Rand radial verlaufende, einstückig mit dem Grundkörper ausgebildete Zungen ausgehen. Die Zungen können dabei radial nach außen oder radial nach innen ausgerichtet sein.

Eine gemäß dem erfindungsgemäßen Verfahren hergestellte Tellerfeder bzw. Membranfeder kann in besonders vorteilhafter Weise innerhalb einer Reibungskupplung verbaut werden, welche ein Kupplungsgehäuse sowie eine mit diesem drehfest, jedoch begrenzt axial verlagerbare Anpressplatte aufweist, wobei die Tellerfeder zwischen Gehäuse und Anpressplatte axial verspannbar ist.

Die Anpressplatte der Reibungskupplung kann dabei in vorteilhafter Weise aus Guss oder Stahlblech bestehen.

Das vorerwähnte Härten, insbesondere von Gussbauteilen zur Verwendung bei Reibungskupplungen, kann auch in vorteilhafter Weise bei Kupplungsgehäusen aus Guss, insbesondere Grauguss, Verwendung finden, und zwar an unterschiedlichsten Bereichen, die zum Beispiel zur Abstützung einer Tellerfeder dienen oder zur Drehmomentübertragung zwischen einer Anpressplatte und dem Gehäuse usw.

Bezüglich der möglichen Veränderungen der Festigkeit des Werkstoffes Grauguss, in Verbindung gegebenenfalls mit Glüharbeitsgängen und/oder Härteprozessen wird auf den Sonderdruck aus "Der Konstrukteur 12/97, Werkstofftechnik" verwiesen.

Weitere sowohl funktionelle als auch herstellungstechnische Vorteile einer erfindungsgemäß hergestellten Tellerfeder bzw. einer mit einer solchen Tellerfeder ausgerüsteten Reibungskupplung werden in Zusammenhang mit der folgenden Figurenbeschreibung näher erörtert.

Dabei zeigen:
- Figur 1: eine Reibungskupplung mit einer Tellerfeder,
- Figur 2: eine Tellerfederplatine nach dem Durchlaufen eines Folgewerkzeuges einer Press- bzw. Stanzmaschine,
- Figur 3: die Tellerfederplatine gemäß Figur 2 in Eingriff mit einer Formrolle,
- Figur 4: eine Formrolle kurz vor dem Eingriff mit dem Außenrand der Tellerfederplatine gemäß den Figuren 2 und 3,
- Figur 5: eine Darstellung gemäß Figur 4, wobei jedoch die Formrolle in Eingriff mit dem Außenrand der Tellerfederplatine ist,
- Figur 6: eine Ausführungsvariante zur Formgebung des Außenrandes, bei der mehrere Formrollen verwendet werden,
- Figur 7: eine Querschnittsausgestaltung am Außenrand einer Tellerfeder nach dem Stand der Technik und
- Figur 8: eine mögliche Querschnittsausgestaltung mittels Formrollen am Außenrand einer Tellerfeder.

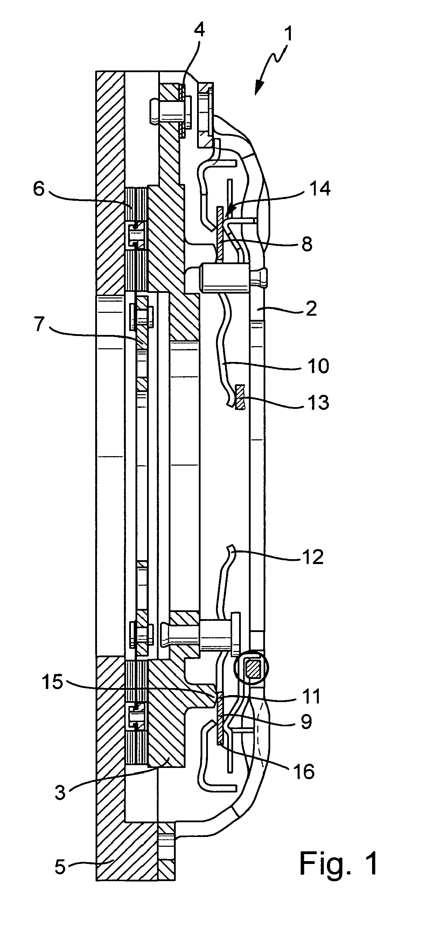

Die in Figur 1 dargestellte Reibungskupplung 1 besitzt ein Kupplungsgehäuse in Form eines Blechdeckels 2. Mit dem Gehäuse 2 ist eine Anpressplatte 3 drehfest, jedoch zumindest begrenzt axial verlagerbar verbunden, und zwar hier mittels Blattfederelementen 4, die in bekannter Weise einerseits mit der Anpressplatte 3 und andererseits mit dem Gehäuse 2 vernietet sind. Das Kupplungsgehäuse 2 ist mit einer Gegenanpressplatte 5 fest verbindbar, zum Beispiel mittels Schrauben. Die Anpressplatte 3 und die Gegenanpressplatte 5 besitzen Reibflächen, zwischen denen die Reibbeläge 6 einer Kupplungsscheibe 7 einspannbar sind.

Zwischen dem Gehäuse 2 und der Anpressplatte 3 ist wirkungsmäßig eine Tellerfeder 8 vorgesehen, die bei dem dargestellten Ausführungsbeispiel auch räumlich axial zwischen dem Gehäuse 2 und der Anpressplatte 3 angeordnet ist. Die Tellerfeder 8 besitzt bei dem dargestellten Ausführungsbeispiel einen ringförmigen Grundkörper 9, der hier als Energiespeicher dient, sowie Betätigungszungen 10, die, ausgehend vom Innenrand 11 des ringförmigen Grundkörpers 9 sich radial nach innen erstrecken. Die Betätigungszungen 10 sind an ihrem radial inneren Endbereich bzw. an deren Zungenspitzen 12 derart ausgebildet, dass sie mit einem Betätigungsmechanismus 13, der lediglich teilweise symbolisch dargestellt ist, zusammenwirken können. Der Betätigungsmechanismus 13 besitzt vorzugsweise, wie an sich bekannt, zumindest ein Betätigungs- bzw. Ausrücklager, welches axial verlagerbar ist, was beispielsweise mittels eines Elektromotors einer hydraulischen oder pneumatischen Vorrichtung oder einer Kombination solcher Antriebsmittel erfolgen kann.

Bei dem dargestellten Ausführungsbeispiel ist der ringförmige Grundkörper 9 gegenüber dem Gehäuse 2 derart abgestützt, dass die Tellerfeder 8 zum Betätigen der Reibungskupplung gegenüber dem Deckel verschwenkt werden kann. Hierfür ist eine vom Deckel 2 getragene Schwenklagerung 14 vorgesehen. Die Tellerfeder 8 ist bei dem dargestellten Ausführungsbeispiel nach Art eines einarmigen Hebels am Gehäuse 2 gelagert, und zwar derart, dass sie mit radial innerhalb der Schwenklagerung 14 liegenden Bereichen die Nocken 15 der Anpressplatte 3 beaufschlagen kann. Hierfür werden die Zungenspitzen 12 durch den Betätigungsmechanismus 13 beaufschlagt. Es handelt sich also bei dem dargestellten Konstruktionsprinzip einer Reibungskupplung gemäß Figur 1 um eine zwangsweise geschlossene Reibungskupplung, bei der die zum Übertragen des anstehenden Drehmomentes erforderliche Anpresskraft auf die Anpressplatte 3 mittels des Betätigungsmechanismus 13 in die Reibungskupplung 1 eingeleitet wird. Es sind jedoch auch allgemein Konstruktionen von Reibungskupplungen bekannt, bei denen die Tellerfeder 8 bzw. ein dieser äquivalentes Bauteil die Anpresskraft für die Druckplatte 3 zumindest teilweise oder gar vollständig selbst aufbringt. Derartige Kupplungsausgestaltungen sind beispielsweise durch die DE 42 39 291 A1, die DE 43 06 505 A1 oder die 43 22 677 A1 bekannt geworden.

Tellerfedern mit einem ringförmigen Grundkörper besitzen in den meisten Fällen zumindest einen umlaufenden Rand, der bei dem dargestellten Ausführungsbeispiel durch den Außenrand 16 gebildet ist.

Insbesondere bei dynamisch beanspruchten Tellerfedern, also bei Tellerfedern, die unter Betriebsbedingungen eine Konizitätsveränderung des Grundkörpers erfahren, wie dies der Fall ist bei Verwendung derselben innerhalb einer Reibungskupplung für Kraftfahrzeuge, ist in vielen Fällen eine sehr hohe Lebensdauer notwendig. Dies setzt voraus, dass keine Brüche im Bereich des ringförmigen Grundkörpers einer Tellerfeder auftreten. Es ist bekannt, dass derartige Brüche insbesondere durch am Innenumfang und am Außenumfang des ringförmigen Grundkörpers einer Tellerfeder auftretenden hohen Spannungen, insbesondere im Kantenbereich der Umfänge auftreten können. Weiterhin können in den Randbereichen Spannungsspitzen infolge von Kerbwirkungen aufgrund von Oberflächenfehlern auftreten. Um die Lebensdauer derartiger Tellerfedern zu erhöhen, ist es bereits bekannt, die Konturen bzw. Ränder von Tellerfedern, insbesondere der Außenrand und/oder der Innenrand zumindest im Bereich der umlaufenden Kanten abzurunden. Dadurch kann die Dauerfestigkeit von Tellerfedern verbessert werden, da durch Abrundung der Kanten eine Optimierung der Spannungsverhältnisse in den Randbereichen des Grundkörpers erzielt wird.

Die Abrundung der Ränder bzw. der Randkanten von Tellerfedern erfolgte bisher durch axiales Prägen in einem Umformwerkzeug. Dabei werden die Stanz- bzw. Schnittkanten, insbesondere am Außenumfang von Tellerfederplatinen, durch axiales Verpressen abgerundet. Hierfür sind in dem entsprechenden Prägewerkzeug Formringe eingebaut, die die gewünschte Geometrie im Bereich des Innen- und/oder des Außenrandes des ringförmigen Grundkörpers einer Tellerfeder erzeugen. Mit dem bekannten Prozess ist die geforderte Geometrie insbesondere im Bereich des Außenrandes einer Tellerfeder nur schwer zu erreichen, da bereits kleine Schwankungen der Prozessparameter oder der Materialqualität die Anformung der gewünschten Geometrie verhindern können. Dadurch kann die vorgeschriebene Lebensdauer insbesondere für kritische Einsatzfälle nicht erzielt werden bzw. es gibt eine erhöhte Anzahl von Ausfällen, die gegebenenfalls eine Rückrufaktion seitens des Automobilherstellers auslösen können.

Durch das im Folgenden näher beschriebene erfindungsgemäße Verfahren können die in zumindest einem Randbereich des Grundkörpers einer Tellerfeder erzeugten Anformungen erheblich besser ausgebildet werden, wodurch die in einem solchen Randbereich auftretenden maximalen Spannungen reduziert und damit die Lebensdauer des entsprechenden Bauteils erheblich erhöht werden können.

Des Weiteren kann durch die dadurch erzielte mögliche erhöhte Belastbarkeit des die Tellerfeder bildenden Materials die Tellerfeder selbst kleiner ausgelegt werden, was sowohl Materialeinsparung als auch Bauraumgewinn bedeutet.

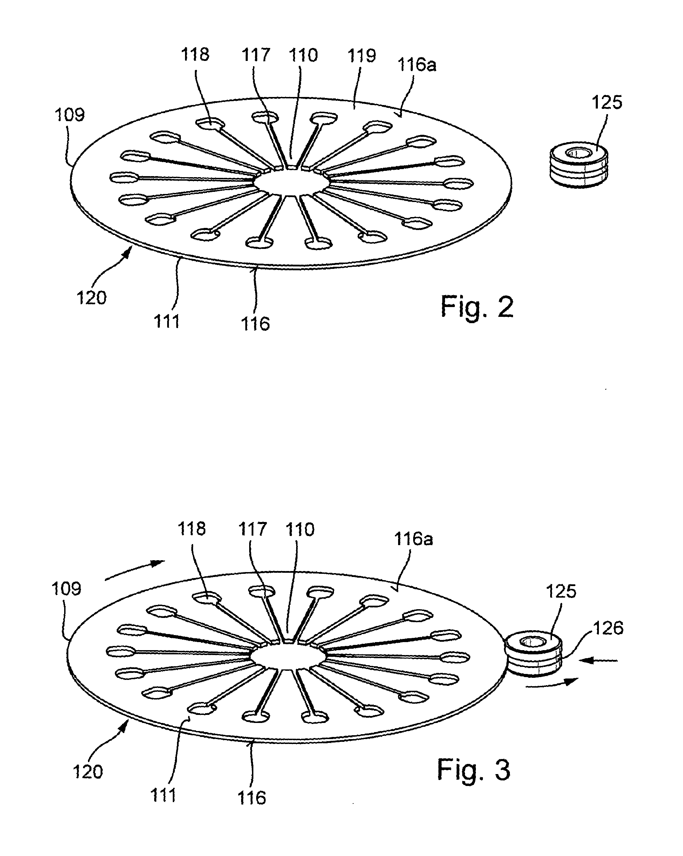

In Figur 2 ist eine Tellerfederplatine 120 dargestellt, welche einen äußeren ringförmigen Grundkörper 119 aufweist, der einen kreisförmigen Außenrand 116 besitzt. Der Außenrand 116 erstreckt sich axial zwischen zwei Oberflächen 116a der Tellerfederplatine 120 bzw. des ringförmigen Grundkörpers 119. Vom radial inneren Randbereich 111 des ringförmigen Grundkörpers 119 erstrecken sich, wie an sich bekannt, radial nach innen hin verlaufende Zungen 110, die nach Fertigstellung der entsprechenden Tellerfeder zum Verschwenken, also zur Konizitätsveränderung des ringförmigen Grundkörpers 119 dienen. Die einzelnen Zungen 110 sind durch radial verlaufende Schlitze 117 voneinander getrennt, welche radial außen in fensterförmige Erweiterungen 118 münden. Die die Erweiterungen 118 begrenzenden Ränder bzw. deren Kanten können zur Erhöhung der aus der Tellerfederplatine 120 herzustellenden Tellerfeder ebenfalls eine Anformung, zum Beispiel Abrundung, aufweisen. Derartige Anformungen können durch axiales Anprägen in einem entsprechenden Werkzeug erzeugt werden.

In Figur 3 ist wiederum die in Figur 2 dargestellte Tellerfederplatine 120 dargestellt, wobei zur Herstellung einer Anformung, wie insbesondere einer Abrundung im Bereich des Außenrandes 116, eine Formrolle 125 gegen den Außenumfang 116 gepresst wird. Die Formrolle 125 besitzt eine die gewünschte Form aufweisende Nut 126, in welche der Außenrand 116 der Tellerfeder 110 eingreift. Die Formrolle 125 ist in einem entsprechenden Halter bzw. Werkzeug verdrehbar gelagert und in Bezug auf die Mittelachse der Tellerfeder 110 radial verlagerbar, so dass sie mit einer definierten Kraft gegen den Außenrand 116 der Tellerfeder 110 gepresst werden kann. Die Anformung des Außenrandes 116 kann erfolgen, indem die Tellerfederplatine 120 um ihre Achse gedreht wird, wobei sich die Formrolle um eine stationäre Drehachse drehen kann. Die Anformung des Außenrandes 116 kann erfolgen, indem die Tellerfederplatine um ihre Drehachse angetrieben wird, wobei gleichzeitig auch die Formrolle motorisch angetrieben werden kann oder aber lediglich mitgeschleppt wird. Es kann jedoch auch zweckmäßig sein, lediglich die Formrolle motorisch anzutreiben. Es könnte auch die Formrolle auf einer kreisförmigen Bahn entlang des Außenrandes 116 bewegt werden, wobei, falls erforderlich, entlang dieser Bewegung die Formrolle selbst wiederum um ihre eigene Rotationsachse motorisch angetrieben werden kann.

Um zu verhindern, dass aufgrund der zur Bildung der entsprechenden Anformungen im Bereich des Außenrandes 116 notwendigen Radialkräfte der ringförmige Grundkörper 109 verformt wird, kann es zweckmäßig sein, die Tellerfederplatine 120 bzw. zumindest Bereiche des ringförmigen Grundkörpers 109 zwischen zwei Platten eines Werkzeuges fest einzuspannen. Zusätzlich oder alternativ hierzu kann auch ein Werkzeug zum Einsatz kommen, welches axiale Vorsprünge aufweist, die in Erweiterungen 118 axial eingreifen können und somit den inneren Randbereich 111 radial abstützen können.

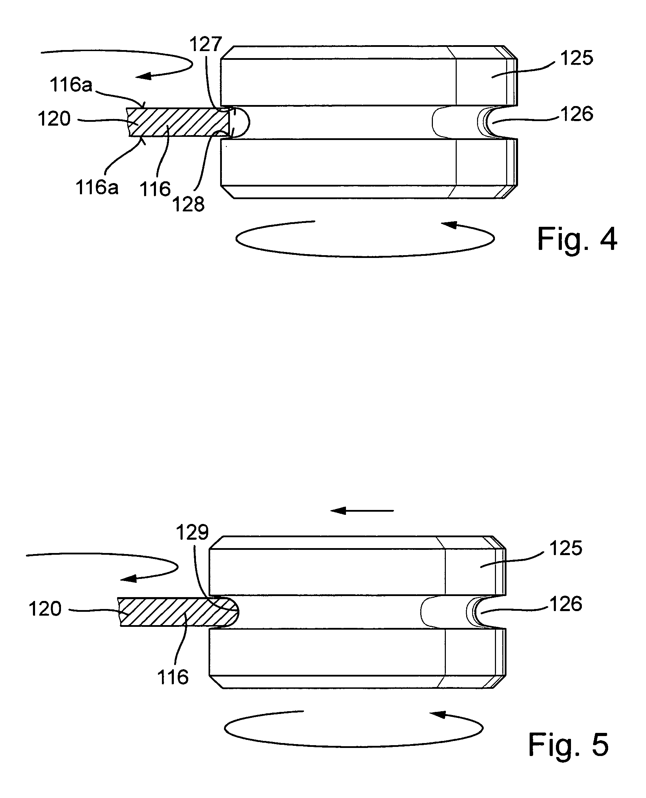

In Figur 4 ist wiederum eine Formrolle 125 dargestellt mit einer ringförmigen Nut 126. Wie aus Figur 4 ersichtlich ist, ist die in die Rolle 125 eingebrachte ringförmige Nut 126 im Querschnitt derart ausgebildet, dass sie am Außenrand 116 der Tellerfederplatine 120 eine zumindest annähernd halbrunde Anprägung erzeugen kann. Die Nut kann jedoch auch eine beliebige andere Form aufweisen. Mittels der wenigstens einen Formrolle 125 können die beim Stanzen der Tellerfederplatine 120 erzeugten Kanten 127, 128 des Außenrandes 116 abgerundet werden, wodurch eine Spannungsreduzierung im Bereich des Außenrandes 116 gewährleistet wird.

In Figur 5 ist wiederum die Tellerfederplatine 120 teilweise dargestellt, wobei die Formrolle und/oder die Platine 120 in radialer Richtung derart verlagert wurde, dass durch eine entsprechende Relativbewegung zwischen der Tellerfederplatine 120 und der wenigstens einen Formrolle 125 eine Abrundung 129 am Außenumfang 116 der Platine 120 geformt wurde. Die Abrundung 129 bzw. die entsprechende Formgebung 129 erfolgt durch Materialverdrängung bzw. durch Fließen des die Tellerfederplatine 120 bildenden Werkstoffes, wie insbesondere Stahl bzw. Federstahl. Der Querschnittverlauf sowie die Breite der Nut 126 ist dabei in Bezug auf die Dicke des die Tellerfederplatine bildenden Werkstoffes derart abgestimmt, dass seitliche axiale Materialverdrängungen bzw. Verdickungen im Randbereich 116 weitgehend vermieden werden.

Obwohl es zweckmäßig sein kann, die Formgebung 129 praktisch lediglich innerhalb einer Rotation der Tellerfederplatine herzustellen, ist es für die weitaus meisten Anwendungsfälle besonders zweckmäßig, die Anformung 129 allmählich anzuformen. Hierfür kann nach jeder Umrundung der Tellerfederplatine 120 die von der wenigstens einen Formrolle 125 ausgeübte Radialkraft auf die Tellerfederplatine 120 vergrößert werden.

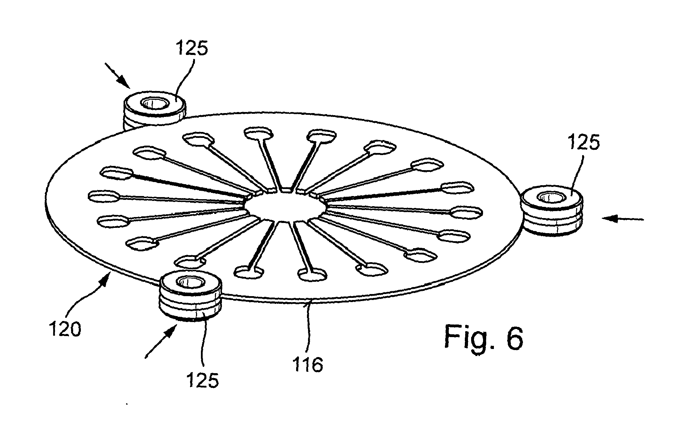

In Figur 6 ist eine Variante zum Anprägen mittels eines Rollprozesses der Außenkontur 116 der Tellerfederplatine 120 dargestellt. Bei dieser Variante werden mehrere Formrollen 125, nämlich bei dem dargestellten Ausführungsbeispiel drei derartige Formrollen 125, verwendet. Die Formrollen sind dabei vorzugsweise gleichmäßig über den Umfang der Tellerfederplatine 120 angeordnet.

Wie bereits angedeutet, kann die ungehärtete Tellerfederplatine 120 axial zwischen zwei drehbaren Platten bzw. Tellern konzentrisch eingespannt werden. Dabei kann mindestens einer der Teller angetrieben sein und der Gegenteller gegebenenfalls mitgeschleppt werden. Der so in Rotation versetzten Tellerfederplatine 120 kann dann eine geschleppte oder rotatorisch angetriebene Formrolle in Richtung Drehachse der Tellerfederplatine zugeführt werden. Die relative radiale Verlagerung der wenigstens einen Formrolle gegenüber der Platine und die durch diese ausgeübte Radialkraft auf den Außenrand der Tellerfederplatine werden dabei derart bemessen, dass gewährleistet wird, dass die Kontur der Nut der Formrolle zumindest weitestgehend an dem Außenumfang der Tellerfederplatine abgebildet ist.

In vorteilhafter Weise kann der Rollprozess mit dem Stanzprozess der Tellerfederplatine 120 verkettet werden, so dass ein zusätzliches Handling vermieden werden kann.

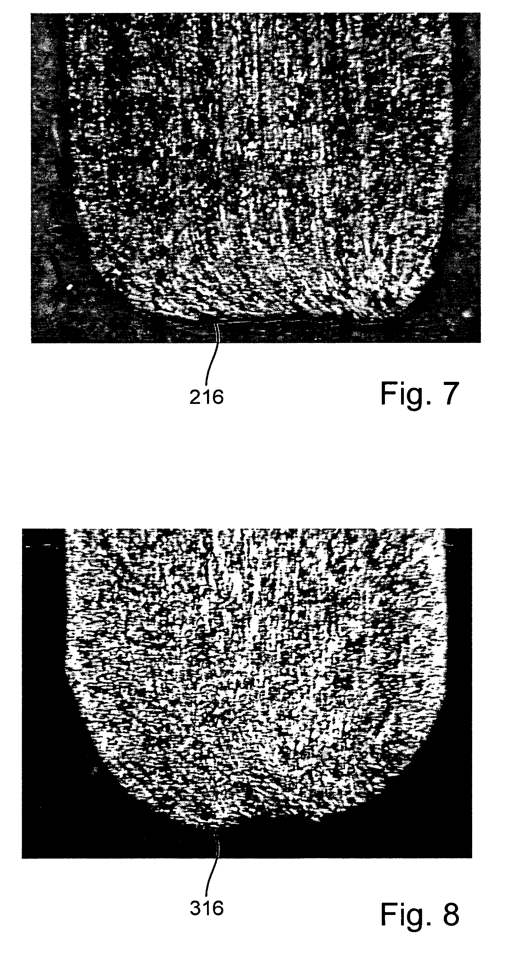

In Figur 7 ist der Außenbereich des ringförmigen Grundkörpers einer Tellerfeder dargestellt, wobei die Kanten des Außenumfangs 216 in konventioneller Weise mittels Anprägen in axialer Richtung in einem Werkzeug hergestellt wurden.

In Figur 8 ist der Außenbereich eines ringförmigen Grundkörpers einer Tellerfeder dargestellt, wobei der Außenrand 316 mittels Formrollen abgerundet wurde. Es ist ersichtlich, dass mittels des erfindungsgemäßen Verfahrens die Ränder bzw. die Kanten von Tellerfedern mit wenigstens einem ringförmigen Grundkörper spannungstechnisch wesentlich besser ausgebildet werden können.

Das erfindungsgemäße Verfahren kann sowohl bei Tellerfedern mit einem umlaufenden Außenrand als auch bei Tellerfedern mit einem umlaufenden Innenrand Verwendung finden.

Nachdem die gewünschten Anformungen an einer Tellerfederplatine 120, welche vorzugsweise aus einem ungehärteten Federstahl besteht, realisiert wurden, kann die Tellerfederplatine 120 in bekannter Weise weiterbearbeitet werden. So kann die Platine gehärtet und angelassen werden und ihre endgültige Tellerfederform erhalten. Vor und/oder während und/oder nach den Wärmebehandlungen kann, falls erforderlich, die Oberfläche der Tellerfederplatine bzw. der Tellerfeder mechanisch oder chemisch behandelt werden. So kann beispielsweise die Tellerfeder eine gestrahlte Oberfläche aufweisen, um eine höhere Dauerfestigkeit zu erzielen.

Die Ausführungsbeispiele sind nicht als Einschränkung der Erfindung zu verstehen. Vielmehr sind im Rahmen der vorliegenden Offenbarung zahlreiche Abänderungen und Modifikationen möglich, insbesondere solche, die durch Kombination oder Abwandlung von einzelnen in Verbindung mit den in der allgemeinen Beschreibung und der Figurenbeschreibung sowie den Ansprüchen beschriebenen und in den Zeichnungen enthaltenen Merkmalen bzw. Elementen oder Verfahrensschritten gebildet werden können.

### Bezugszeichenliste

- 1: Reibungskupplung
- 2: Gehäuse
- 3: Anpressplatte
- 4: Blattfederelement
- 5: Gegenanpressplatte
- 6: Reibbeläge
- 7: Kupplungsscheibe
- 8: Tellerfeder
- 9: Ringförmiger Grundkörper
- 10: Betätigungszungen
- 11: Innenrand
- 12: Zungenspitzen
- 13: Betätigungsmechanismus
- 14: Schwenklagerung
- 15: Nocken
- 16: Außenrand
- 110: Zungen
- 111: Randbereich
- 112: -
- 113: -
- 114: -
- 115: -
- 116: Außenrand
- 117: Schlitze
- 118: Erweiterungen
- 119: Ringförmiger Grundkörper
- 120: Tellerfederplatine
- 121: -
- 122: -
- 123: -
- 124: -
- 125: Formrolle
- 126: Nut
- 127: Kante
- 128: Kante
- 129: Abrundung
- 216: Außenumfang
- 316: Außenrand

## Patentansprüche

1. Verfahren zur Herstellung einer Tellerfeder mit einem ringförmigen Grundkörper, der zumindest einen umlaufenden Rand aufweist, welcher zumindest eine durch Materialverdrängung gebildete Anformung besitzt, **dadurch gekennzeichnet, dass** die Materialverdrängung durch einen Rollprozess erzeugt wird.

2. Verfahren nach Anspruch 1, **dadurch gekennzeichnet, dass** die Materialverdrängung mittels wenigstens einer radial auf den ringförmigen Grundkörper einwirkenden, entlang des Umfanges des Grundkörpers geführten Formrolle erzeugt ist.

3. Verfahren nach Anspruch 1 oder 2, **dadurch gekennzeichnet, dass** die Tellerfeder lediglich aus einem ringförmigen Grundkörper besteht und sowohl am Außenrand als auch am Innenrand durch einen Rollprozess erzeugte Anformung aufweist.

4. Verfahren nach Anspruch 1 oder 2, **dadurch gekennzeichnet, dass** die Tellerfeder einen ringförmigen Grundkörper besitzt mit einem umlaufenden Rand und einem Randbereich, von dem radial verlaufende Zungen ausgehen.

5. Verfahren nach Anspruch 4, **dadurch gekennzeichnet, dass** der Außenrand des ringförmigen Grundkörpers umlaufend ist und die Zungen einstückig vom radialen Innenrand des Grundkörpers ausgehen.

6. Verfahren nach einem der Ansprüche 1 bis 5, **dadurch gekennzeichnet, dass** die wenigstens eine Anformung eine Abrundung bildet.

7. Tellerfeder mit einem ringförmigen Grundkörper, der zumindest einen umlaufenden Rand aufweist, welcher zumindest eine durch Materialverdrängung gebildete Anformung besitzt, **dadurch gekennzeichnet, dass** die Materialverdrängung durch einen Rollprozess erzeugt wurde.

8. Reibungskupplung mit einem Gehäuse und einer mit diesem drehfest, jedoch begrenzt axial verlagerbaren Anpressplatte, die mittels einer zwischen dem Gehäuse und der Anpressplatte axial verspannbaren Tellerfeder beaufschlagbar ist, **dadurch gekennzeichnet, dass** die Tellerfeder gemäß dem Anspruch 7 ausgebildet ist und nach wenigstens einem der Verfahrensansprüche 1 bis 5 hergestellt wurde.
